# EUROPEAN PATENT SPECIFICATION

(11) **EP 0 661 848 B1**
(45) Date of publication and mention of the grant of the patent: **05.09.2001**
(21) Application number: 94309835.0
(22) Date of filing: 28.12.1994
(51) Int. Cl.: H04L 12/26

(54) **Monitor and control system for communications equipment**
Überwachungs- und Steuereinrichtung für Kommunikationseinrichtung
Système de surveillance et de contrôle pour équipement de communication

(30) Priority: 28.12.1993 JP 33430193
(43) Date of publication of application: 05.07.1995
(73) Proprietor: NEC Corporation, Minato-ku, Tokyo 108-8001 (JP)
(72) Inventor: Togo, Hiroshi, c/o NEC Corporation, Minato-ku, Tokyo 108-01 (JP)
(74) Representative: Abnett, Richard Charles

(56) References cited:
- US-A- 4 048 620
- PATENT ABSTRACTS OF JAPAN vol. 14 no. 151 (E-0906) ,22 March 1990 & JP-A-02 011030 (TOSHIBA CORP) 16 January 1990,

## Description

### BACKGROUND OF THE INVENTION

The present invention relates to a monitor and control system for monitoring a plurality of pieces of communication equipment, for example, for monitoring the status and controlling the operations of transceivers included in satellite communication earth stations.

For remotely monitoring and controlling various units built into a plurality of pieces of communication equipment, it is common practice to cause a central monitor and control unit situated at a particular location to receive information from the pieces of equipment and monitor arid control them on the basis of the received information. The plurality of pieces of equipment and the monitor and control unit are usually interfaced either by parallel signals or by serial signals. However, it may be that not all the pieces of equipment are implemented by the same interface mode. For example, even when satellite communication earth stations share the same monitor and control items, it often happens that some of them are interfaced to the monitor and control unit by parallel signals while the others are interfaced by serial signals. This is derived from, among others, a difference in design concept and a difference in device arrangement.

To allow the monitor and control unit to accommodate a greater number of monitor and control items associated with the equipment, the interface scheme using serial signals and bus type connection is advantageous over the interface scheme using parallel signals from the cost standpoint, as well known in the art. For example, the interface scheme using serial signals reduces the number of signals, compared to the interface scheme using parallel signals. In the case where the monitor and control unit has a serial interface as a standard while the equipment can process only parallel signals, it is common practice to provide a parallel/serial conversion unit between the monitor and control unit and the equipment. In this condition, all the parallel signals from the equipment are converted to a serial signal and then sent to the monitor and control unit.

It is preferable that a single parallel/serial interface conversion unit, in the hardware aspect, be allocated to each piece of equipment in order to deal with the processing of the monitor and control unit individually. However, a plurality of pieces of equipment are usually dealt with by a single parallel/serial conversion unit for reasons of economy.

Therefore, the conversion unit generally converts parallel signals from a number of pieces of equipment into a serial signal collectively, and sends the data to the monitor and control unit in a single packet.

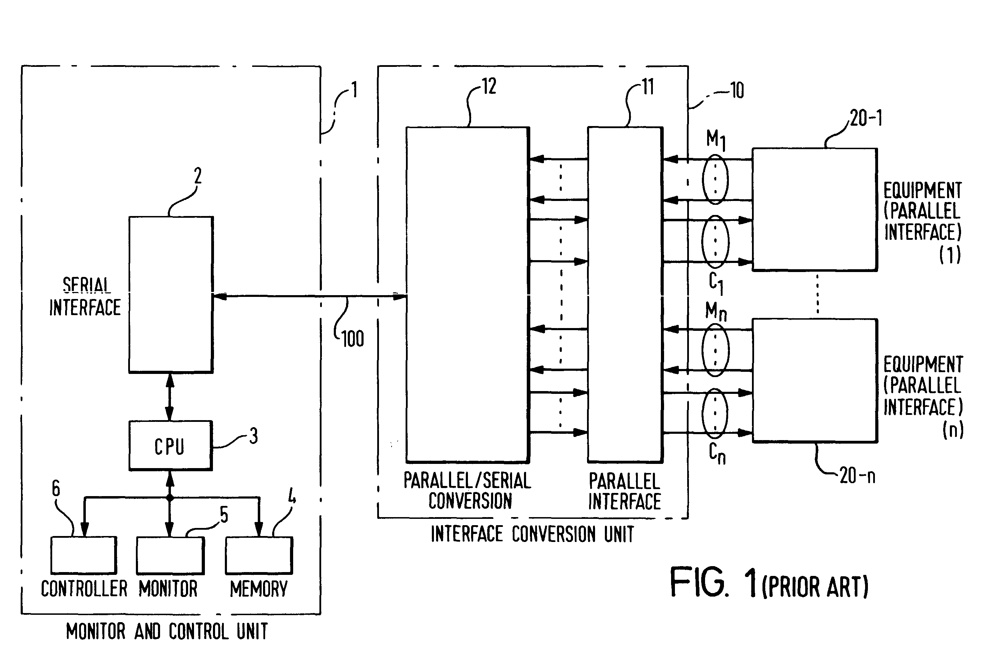

Referring to Fig. 1, a known monitor and control system is shown which is applicable to equipment interfaced to the system by parallel signals. As shown, the system is generally made up of a monitor and control unit 1 and an interface conversion unit 10. A plurality of pieces of equipment 20-1 to 20-n (n being 2 or an integer greater than 2) are monitored and controlled by the system. The monitor and control unit 1 has a serial interface 2, a CPU (Central Processing Unit) 3, a memory 4, a monitor 5, and a controller 6. The interface conversion unit 10 has a parallel interface 11 and a parallel/serial conversion section 12.

The equipment 20-1 to 20-n and the interface conversion unit 10 are interconnected, as follows. The equipment 20-1, for example, is provided with parallel output interface signals M₁ as plural data for monitoring and parallel input interface signals C₁ as plural data for control. Likewise, the equipment 20-n is provided with parallel output signals Mn as plural data for monitoring and parallel input interface signals Cn as plural data for control. The parallel input and output interface signals Ml - Mn and Cl - Cn are connected to the parallel interface 11 of the interface conversion unit 10 to be converted to corresponding logic level signals. As to the input interface signals Ml - Mn, the parallel interface 11 determines, usually with photocouplers, whether or not input currents are present, thereby monitoring the status of each piece of equipment 20-1 to 20-n. Usually, the output interface signals Cl - Cn selectively open or close relay contacts built in the parallel interface 11 so as to control the equipment 20-1 to 20-n.

The parallel logic level signals from the parallel interface 11 are applied to the parallel/serial conversion unit 12. The conversion unit 12 transforms the parallel input signals to a serial signal and sends it to the monitor and control unit 1 via a serial interface 100. This type of monitor and control system is taught in, for example, Japanese Patent Laid-Open Publication No. 2-11030 (1990).

The monitor and control unit 1 is usually remote from the equipment 20-1 to 20-n and monitors and controls them via the serial interface 100. While only one serial interface 100 is shown in the figure for illustrative purpose, a number of serial interfaces may, of course, be installed between the units 1 and 10.

The operation of the monitor and control unit 1 will now be described. The serial interface signal 100 applied to the monitor and control unit 1 is coupled to the serial interface 2. The serial interface 2 is connected to the CPU 3 in a bus configuration. The CPU 3 detects the data in the serial interface 2 and then delivers them to the monitor 5. Also, the CPU 3 superposes control signals from the controller 6 on data in the serial interface 2, thereby producing serial interface data 100. In this manner, the monitor and control unit 1 monitors or controls the plurality of pieces of equipment 20-1 to 20-n. The memory 4 stores software for analyzing data received from the equipment 20-1 to 20-n, software for processing serial data, etc.

Assume that data are interchanged between pieces of equipment each having only a serial interface and a monitor and control system. Then, software stored in the monitor and control system for analyzing input and output data signals can be readily standardized only if a data format is defined beforehand and software matching the format is stored in a memory. On the other hand, in the architecture of FIG. 1 wherein the pieces of equipment 20-1 to 20-n each have parallel signals only, the signals are collectively transformed to a serial signal by the parallel/serial conversion section 11. Specifically, to deal with a great number of monitor and control items for various purposes at a time, the conversion unit 11 is provided with a conversion circuit capable of accommodating the maximum processing ability of the particular monitor and control system. The processing ability includes, for example, the spaces allocated to a parallel interface circuit and serial interface circuit in the mechanical aspect and the processing ability of a CPU and the capacity of a memory in the electrical aspect. Therefore, the number of pieces of equipement is nm (n ≤ nm) at maximum, while the number of control items is Cl - Cm (where Mn ≤ Mm and Cn ≤ Cm). As a result, despite the fact that the number of necessary monitor and control items is Ml - Mn and Cl - Cn, the parallel/serial conversion section 12 executes conversion with the maximum number of items Ml - Mm and Cl-Cm at a time. Hence, when the number of pieces of equipment to be monitored and controlled (n in the figure) and the number of monitor and control items of each monitor and control unit are changed, the data format should also be changed. As a result, the data analyzing software stored in the memory 4 should be changed on a system basis. Regarding the flexibility and expandability of monitor and control units, when the pieces of equipment to be monitored and controlled each have a serial interface, the number of pieces of equipment and the monitor and control items of the equipment can be easily changed if data analyzing software standardized on the basis of the number of pieces of equipment are validated or invalidated by a number matching the change. However, in the case of equipment having parallel interfaces, the data format after parallel/serial conversion and input to the monitor and control unit changes with a change in the architecture, so that the data analyzing software should be changed each time.

### SUMMARY OF THE INVENTION

According to the present invention there is provided a monitor and control system for a plurality of pieces of communication equipment, the communication equipment outputting a plurality of monitor items *via* parallel interfaces and inputting a plurality of control items *via* parallel interfaces, the monitor and control system comprising:
a single monitor and control unit for receiving and monitoring the monitor items and generating and outputting the control items for the plurality of pieces of communication equipment; and
an interface conversion unit for converting first parallel signals from the communication equipment to a first serial signal and sending the first serial signal to the monitor and control unit, and for converting a first serial signal received from the monitor and control unit to second parallel signals and sending the second parallel signals to the communication equipment;
characterized in that
the monitor and control unit comprises means for generating group information relating to the number of pieces of communication equipment and the number of monitor and control items, equipment-by-equipment, and means for sending the group information to the interface conversion unit by a second serial signal; and
the interface conversion unit comprises an address generator for receiving the group information from the monitor and control unit and for dividing the first parallel signals and the second parallel signals for the communication equipment into groups on the basis of the group information.

### BRIEF DESCRIPTION OF THE DRAWINGS

The features and advantages of the present invention will become more apparent from the following detailed description taken with the accompanying drawings in which:
Fig. 1 is a block diagram schematically showing a known monitor and control system for communication equipment;
Fig. 2 is a block diagram schematically showing a monitor and control system embodying the present invention;
Fig. 3 is a schematic block diagram showing a specific construction of an interface conversion unit included in the embodiment; and
Fig. 4 shows a serial data format particular to the configuration of Fig. 3.

### DETAILED DESCRIPTION OF THE PREFERRED EMBODIMENT

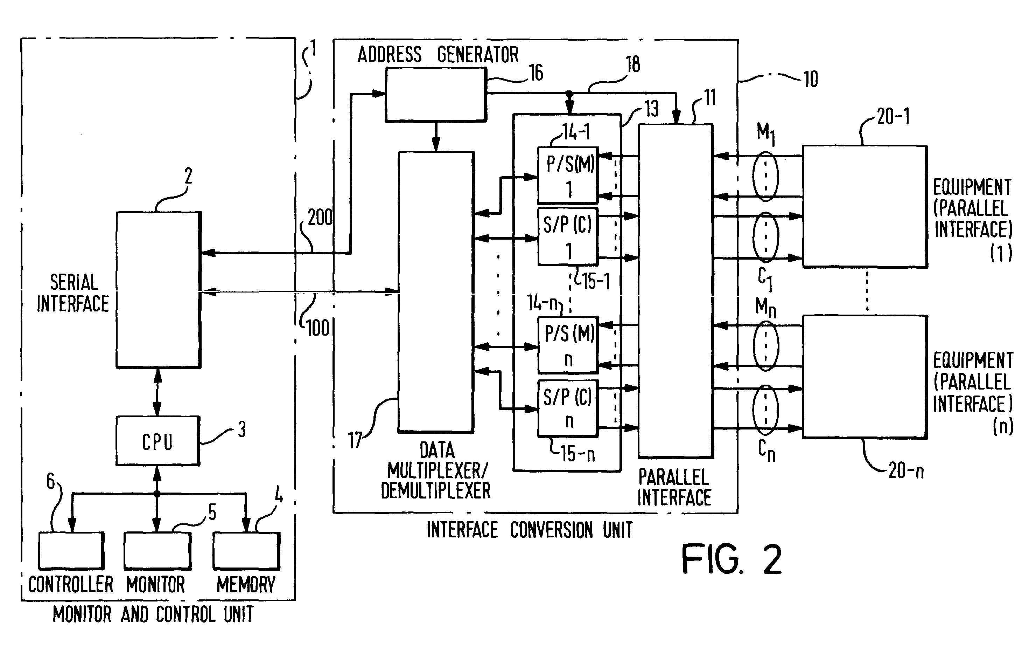

Referring to Fig. 2, a monitor and control system embodying the present invention will be described. As shown, the system has a monitor and control unit 1 and an interface conversion unit 10 and monitors and controls communication equipment 20-1 to 20-n. The pieces of equipment 20-1 to 20-n respectively send parallel output signals Ml - Mn and receive parallel input signals Cl - Cn. The interface conversion unit 10 has a parallel interface section 11, a parallel/serial conversion section 13, a data multiplexer/demultiplexer 17, and an address generator 16. A serial interface signal 200 is inter-changed between the single monitor and control unit 1 and the interface conversion unit 10 to indicate the number (n) of pieces of equipment 20-1 to 20-n and the number of parallel input or output data (Ml - Mn or Cl - Cn) particular to each of the pieces of equipment 20-1 to 20-n. The monitor and control unit 1 is constructed and operated in exactly the same manner as the unit 1 shown in Fig. 1 and will not be described again in order to avoid redundancy.

How the embodiment monitors and controls the communication equipment 20-1 to 20-n will be described in detail. The monitor and control unit 1 is connected to the equipment 20-1 to 20-n each having a parallel interface via the interface conversion unit 10. The monitor and control unit 1 knows beforehand the number (n) of pieces of equipment 20-1 to 20-n and the number of monitor and control items (Ml - Mn and Cl - Cn) equipment-by-equipment and sends them to the address generator 16 in the form of the serial interface signal 200. The equipment 20-1 to 20-n send parallel data to the parallel interface section 11 via the respective parallel interface. The parallel interface section 11, like the known parallel interface, is made up of a number of parallel interfaces M1 - Mm and C1 - Cm corresponding to the maximum number of pieces of equipment (nm) which can be dealt with by the monitor and control system and the maximum number of monitor and control items, so that it can accommodate a great number of pieces of equipment. Likewise, the parallel/serial conversion section 13 has parallel/serial conversion circuits corresponding in number to the parallel interfaces of the interface section 11. Receiving group information 18 from the address generator 16, the parallel interface section 11 divides each input or output data thereof into n groups on the basis of the number (n) of pieces of equipment and the equipment-by-equipment number of control items (Ml - Mn or Cl - Cn) as indicated by the monitor and control unit 1. The group information 18 is also applied to the parallel/serial conversion section 13, so that the n groups of output data drive n parallel-to-serial (P/S) converters 14-1 to 14-n constituting the conversion section 13. On the other hand, serial data demultiplexed by the demultiplexer 17 are divided into n groups and then applied to the parallel interface section 11 as parallel input signals by way of serial-to-parallel (S/P) converters 15-1 to 15-n. The multiplexer 17 receives address data based on the individual P/S converters 14-1 to 14-n from the address generator 16, and assigns them to the serial data from the conversion section 13, multiplexes the data, and then applies the resulting data to the monitor and control unit 1. The demultiplexer 17 demultiplexes data received over the serial interface 100 and delivers them to the respective S/P converters 15-1 to 15-n on the basis of the group information 18 from the address generator 16.

As stated above, the parallel/serial conversion section 13 has a number of conversion circuits which is identical with the number n of actual pieces of equipment 20-1 to 20-n. Hence, all the equipment 20-1 to 20-n connected to the system can be regarded as having a serial interface, as seen from the monitor and control unit 1. It follows that only interface data analyzing software matching a serial interface needs to be stored in the memory 4.

When data from the monitor and control unit 1 should be sent to the equipment 20-1 to 20-n, they will be converted to parallel data on an equipment basis and then sent to the respective equipment 20-1 to 20-n.

Referring to Fig. 3, a specific construction of the interface conversion unit 10 is shown. As shown, the unit 10 has a parallel interface circuit 50 to which parallel input interfaces Ml - Mn and parallel output interfaces Cl - Cn are connected. Input or output data transformed to logical levels by the parallel interface 50 are fed to a CPU 51 over a bus line. The CPU 51 detects address data (n and Ml - Mn or Cl - Cn) according to a program stored in a memory 53, and then controls the interface circuit 50 to group the parallel signals on the basis of the number of pieces of equipment. Further, the CPU 51 multiplexes or demultiplexes the input or output data of the interface circuit 50 in a serial data format and delivers the resulting serial interface data 100 via a serial interface 52. The processing to be executed by such a unit 10 can be implemented by software and is, therefore, practicable with relatively simple circuitry.

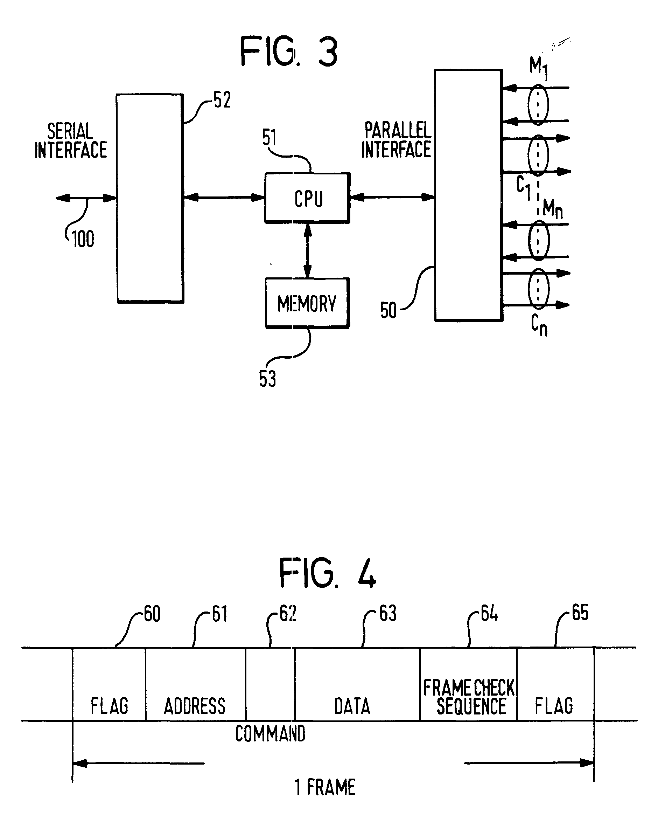

Fig. 4 shows a format particular to the serial data 100 of the illustrative embodiment. As shown, the format has a flag field 60 representing the beginning of a single frame, an address data field 61 containing data for distinguishing monitor and control, a command field 62, a monitor/control data field 63 meant for equipment data, a frame check sequence data field 64 for correcting errors on communication channels, and a flag field 65 representing the end of the frame. The monitor and control unit 1 and the equipment 20-1 to 20-n monitored and controlled thereby interchange data by use of such a serial data format.

In summary, in a monitor and control system accommodating both equipment having a serial interface and equipment having a parallel interface, the present system allows a monitor and control unit to be regarded as if a plurality of equipment having only a serial interface were connected thereto and, therefore, implements such a control device only with software command to all the pieces of equipment. Moreover, only a single parallel/serial interface conversion unit can flexibly adapt itself to the addition or modification of the equipment. In addition, in the event of additions or modifications to the equipment, it is only necessary to validate or invalidate the software corresponding to the equipment without regard to the parallel/serial interface. Hence, the present monitor and control system is reliable, flexible, and of low cost. The low cost is achievable since the software does not need any changes.

## Claims

1. A monitor and control system for a plurality of pieces of communication equipment (20), the communication equipment outputting a plurality of monitor items *via* parallel interfaces and inputting a plurality of control items *via* parallel interfaces, the monitor and control system comprising:
a single monitor and control unit (1) for receiving and monitoring the monitor items and generating and outputting the control items for the plurality of pieces of communication equipment (20); and
an interface conversion unit (10) for converting first parallel signals (M1...Mn) from the communication equipment (20) to a first serial signal (100) and sending the first serial signal to the monitor and control unit (1), and for converting a first serial signal (100) received from the monitor and control unit (1) to second parallel signals (C1...Cn) and sending the second parallel signals to the communication equipment (20);
**characterized in that**
the monitor and control unit (1) comprises means for generating group information relating to the number of pieces of communication equipment (20) and the number of monitor and control items, equipment-by-equipment, and means for sending the group information to the interface conversion unit (10) by a second serial signal (200); and
the interface conversion unit (10) comprises an address generator (16) for receiving the group information from the monitor and control unit and for dividing the first parallel signals (M1...Mn) and the second parallel signals (C1...Cn) for the communication equipment into groups on the basis of the group information.

2. The system as claimed in claim 1, wherein the interface conversion unit (10) comprises:
a parallel interface section (11) for interfacing to the communication equipment (20) via parallel interfaces;
a parallel/serial conversion section (13) having a plurality of parallel-to-serial converters and serial-to-parallel converters (14, 15) ;
an address generator (16) for receiving the group information from the monitor and control unit (1) and dividing parallel interface signals of the parallel interface section (11) and of the parallel/serial conversion section (13) into groups on the basis of the group information; and
a data multiplexer and demultiplexer (17) for multiplexing and demultiplexing the first serial signal (100) and the second serial signal (200).

3. The system as claimed in claim 1 or 2, wherein the monitor and control unit (1) comprises:
monitor means (5) for displaying monitor data from the communication equipment (20) in response to the first serial signal (100) fed from the interface conversion unit (10) ;
a controller (6) for generating control data for the communication equipment (20) to be transmitted by the first serial signal (100); and
a CPU (3) for controlling transmission and reception of the monitor data, the control data, and the first serial signal.

4. The system as claimed in claim 1, 2 or 3, wherein the first serial signal (100) has a frame format including the monitor data and the control data.

## Patentansprüche

1. Überwachungs- und Steuersystem für eine Mehrzahl von Kommunikationsgeräten (20), wobei die Kommunikationsgeräte eine Mehrzahl von Überwachungselementen über parallele Schnittstellen ausgeben und eine Mehrzahl von Steuerungselementen über parallele Schnittstellen eingeben, wobei das Überwachungs- und Steuersystem Folgendes umfasst:
eine einzelne Überwachungs- und Steuereinheit (1) zum Empfangen und Überwachen der Überwachungselemente und zum Erzeugen und Ausgeben der Steuerungselemente für die Mehrzahl von Kommunikationsgeräten (20); und
eine Schnittstellenwandlereinheit (10) zum Umsetzen erster paralleler Signale (M1...Mn) von den Kommunikationsgeräten (20) in ein erstes serielles Signal (100) und Senden des ersten seriellen Signals zur Überwachung- und Steuereinheit (1) und zum Umsetzen eines empfangenen ersten seriellen Signals (100) von der Überwachungs- und Steuereinheit (1) in zweite parallele Signale (C1...Cn) und Senden der zweiten parallelen Signale an die Kommunikationsgeräte (20), **dadurch gekennzeichnet**, dass:
die Überwachungs- und Steuereinheit (1) Mittel zum Erzeugen von Gruppeninformationen, die sich auf die Anzahl von Kommunikationsgeräten (20) und die jeweilige Anzahl von Überwachungs- und Steuerelementen der einzelnen Geräte beziehen, und Mittel zum Senden der Gruppeninformationen zur Schnittstellenwandlereinheit (10) über ein zweites serielles Signal (200) beinhaltet; und
die Schnittstellenwandlereinheit (10) einen Adressgenerator (16) zum Empfangen der Gruppeninformationen von der Überwachungs- und Steuereinheit und zum Aufteilen der ersten parallelen Signale (M1...Mn) und der zweiten parallelen Signale (C1...Cn) für die Kommunikationsgeräte in Gruppen auf Basis der Gruppeninformationen beinhaltet.

2. System nach Anspruch 1, bei dem die Schnittstellenwandlereinheit (10) Folgendes umfasst:
einen parallelen Schnittstellenabschnitt (11) zum Anschließen an die Kommunikationsgeräte (20) über parallele Schnittstellen,
einen Parallel-Serien-Wandlungsabschnitt (13) mit einer Mehrzahl von Parallel-Serien-Wandlern und Serien-Parallel-Wandlern (14, 15),
einen Adressgenerator (16) zum Empfangen der Gruppeninformationen von der Überwachungs- und Steuereinheit (1) und zum Aufteilen der parallelen Schnittstellensignale des parallelen Schnittstellenabschnitts (11) und des Parallel-Serien-Wandlungsabschnitts (13) in Gruppen auf der Basis der Gruppeninformationen, und
einen Datenmultiplexer und -demultiplexer (17) zum Multiplexen und Demultiplexen des ersten seriellen Signals (100) und des zweiten seriellen Signals (200).

3. System nach Anspruch 1 oder Anspruch 2, bei dem die Überwachungs- und Steuereinheit (1) Folgendes umfasst:
Monitor (5) zum Anzeigen von Überwachungsdaten von den Kommunikationsgeräten (20) in Reaktion auf das von der Schnittstellenwandlungseinheit (10) gespeiste erste serielle Signal (100),
einen Controller (6) zum Erzeugen von Steuerdaten für die Kommunikationsgeräte (20) zum Übertragen durch das erste serielle Signal (100) und
eine Zentraleinheit (CPU) (3) zum Steuern der Übertragung und des Empfangs der Überwachungsdaten, der Steuerdaten und des ersten seriellen Signals.

4. System nach Anspruch 1, 2 oder 3, bei dem das erste serielle Signal (100) ein Rahmenformat hat, das die Überwachungsdaten und die Steuerdaten beinhaltet.

## Revendications

1. Système de surveillance et de commande d'une pluralité de matériels de communication (20), les matériels de communication sortant une pluralité d'éléments de surveillance par l'intermédiaire d'inte-faces parallèles et entrant une pluralité de données de commande par l'intermédiaire d'interfaces parallèles, le système de surveillance et de commande comprenant :
une unité de surveillance et de commande unique (1) pour recevoir et surveiller les éléments de surveillance et générer et sortir les éléments de commande pour la pluralité des matériels de communication (20); et
une unité de conversion d'interface (10) pour convertir des premiers signaux parallèles (M1 ... Mn) provenant des matériels de communication (20) en un premier signal série (100) et envoyer le premier signal série à l'unité de surveillance et de commande (1), et pour convertir un premier signal série (100) reçu depuis l'unité de surveillance et de commande (1) en des deuxièmes signaux parallèles (C1 ... Cn) et envoyer les deuxièmes signaux parallèles aux matériels de communication (20) ;
**caractérisé en ce que**
l'unité de surveillance et de commande (1) comprend un moyen pour générer des informations de groupe concernant le nombre de matériels de communication (20) et le nombre d'éléments de surveillance et de commande, matériel par matériel, et des moyens pour envoyer les informations de groupe à l'unité de conversion d'interface (10) par un deuxième signal série (200); et
l'unité de conversion d'interface (10) comprend un générateur d'adresses (16) pour recevoir les informations de groupe provenant de l'unité de surveillance et de commande et pour diviser les premiers signaux parallèles (M1 ... Mn) et les deuxièmes signaux parallèles (C1...Cn) pour le matériel de communication en groupes selon les informations de groupe.

2. Système selon la revendication 1, dans lequel l'unité de conversion d'interface (10) comprend :
une section d'interface parallèle (11) pour l'interfaçage avec les matériels de communication (20) par l'intermédiaire d'interfaces parallèles ;
une section de conversion parallèle/série (13) ayant une pluralité de convertisseurs parallèles/série et de convertisseurs série/parallèles (14, 15) ;
un générateur d'adresses (16) pour recevoir les informations de groupe depuis l'unité de surveillance et de commande (1) et diviser les signaux d'interface parallèles de la section d'interface parallèle (11) et de la section de conversion parallèle/série (13) en groupes en fonction des informations de groupe ; et
un multiplexeur et démultiplexeur de données (17) pour multiplexeur et démultiplexer le premier signal série (100) et le deuxième signal série (200).

3. Système selon la revendication 1 ou 2, dans lequel l'unité de surveillance et de commande (1) comprend :
un moyen de surveillance (5) pour afficher des données de surveillance provenant des matériels de communication (20) en réponse au premier signal série (100) passé depuis l'unité de conversion d'interface (10);
un contrôleur (6) pour générer des données de commande pour les matériels de communication (20) devant être transmises par le premier signal série (100); et
une unité centrale (3) pour commander l'émission et la réception des données de surveillance, des données de commande et du premier signal série.

4. Système selon la revendication 1, 2 ou 3, dans lequel le premier signal série (100) a un format de trame comportant les données de surveillance et les données de commande.
